Europäisches Patentamt

European Patent Office

Office européen des brevets

(11) Numéro de publication : **0 631 410 A2**

# (12) DEMANDE DE BREVET EUROPEEN

(21) Numéro de dépôt : **94440037.3**

(22) Date de dépôt : **27.05.94**

(51) Int. Cl.⁵ : **H04L 12/28**

(30) Priorité : **28.05.93 FR 9306624**

(43) Date de publication de la demande :
**28.12.94 Bulletin 94/52**

(84) Etats contractants désignés :
**BE DE ES GB IT NL PT**

(71) Demandeur : **I & T COM (Société Anonyme)**
**6 rue Marconi**
**F-57070 Metz (FR)**

(72) Inventeur : **Schmeltzer, Christophe**
**8 rue Félix Savart**
**F-57070 Metz (FR)**
Inventeur : **Menglier, Eric**
**57bis, rue du Château**
**F-57590 Aulnois/Seille (FR)**

(74) Mandataire : **Nuss, Pierre et al**
**10, rue Jacques Kablé**
**F-67080 Strasbourg Cédex (FR)**

(54) **Procédé de communication interactif, notamment pour des applications en domotique.**

(57)   La présente invention concerne un procédé de communication interactif, notamment pour des applications en domotique.

Procédé caractérisé en ce qu'il consiste à réaliser, sur un câble coaxial, un échange bi-directionnel de messages à partir d'une station primaire unique vers des stations secondaires, par un adressage individuel ou de diffusion générale ou restreinte, l'initiative de l'émission étant gérée par la station primaire.

EP 0 631 410 A2

La présente invention concerne le domaine du contrôle, de la commande et de la supervision d'équipements ou de réseaux domestiques dans le domaine de la domotique et a pour objet un procédé de communication interactif, notamment pour des applications en domotique.

Actuellement, il existe différents types de systèmes de transmission de données mettant en oeuvre des réseaux cablés existants ou des réseaux spécifiquement installés à cet effet et qui permettent la commande et le contrôle à distance automatisés de certaines fonctions domotiques.

Ces systèmes connus permettent généralement de répondre aux exigences en matière de contrôle et de commande, mais présentent une constitution complexe mettant en oeuvre plusieurs modules individuels de commande et de contrôle gérés par un ou plusieurs modules collectifs de commande eux-mêmes gérés par un module central.

La présente invention propose une simplification des systèmes interactifs existants et des procédés de communication qu'ils mettent en oeuvre.

Elle a, en effet, pour objet un procédé de communication interactif, notamment pour des applications en domotique, caractérisé en ce qu'il consiste à réaliser, sur un câble coaxial, un échange bi-directionnel de messages à partir d'une station primaire unique vers des stations secondaires, par un adressage individuel ou de diffusion générale ou restreinte, l'initiative de l'émission étant gérée par la station primaire.

Conformément à une caractéristique de l'invention, les messages échangés entre la station primaire et la ou les stations secondaires sont structurés en trames de longueurs variables.

Chaque trame est constituée par au moins une "en-tête" comportant un champ de "service" déterminant le type d'échange, un champ "compteur" pour l'identification des trames et un champ "adresse" désignant le destinataire ou l'émetteur. Le destinataire est désigné si la trame est envoyée par la station primaire, alors que l'émetteur est désigné dans le cas où la trame est envoyée par une station secondaire.

Les champs "service" et "compteur" sont regroupés en un octet et le champ "adresse" comporte trois octets.

Les octets constituant les champs de "l'en-tête", à savoir "service", "compteur" et "adresse" sont protégés par un code polynômial de 6 bits, dont le polynôme générateur présente la formule suivante :
$$x^6 + x^5 + x^4 + x^3 + 1$$
et par un champ "contrôle", dont la valeur est calculée par un OU exclusif entre l'octet regroupant les champ "service" et "compteur" et les trois octets du champ "adresse".

Conformément à une autre caractéristique de l'invention, une trame peut être suivie, éventuellement, d'un champ "données" pour former une trame d'information. La trame est alors complétée par un champ "longueur" d'un octet protégé, d'une part, par un code polynômial de formule :
$$x^6 + x^5 + x^4 + x^3 + 1$$
et, d'autre part, par un champ "extension" de 2 bits.

Le champ "données" comporte avantageusement entre 1 octet et 255 octets et est protégé par un code cyclique redondant de 16 bits, dont le polynôme générateur présente la formule suivante :
$$x^{16} + x^{12} + x^5 + 1.$$

Une adresse de station secondaire est constituée de 3 octets décomposés en 6 quartets de 4 bits, chaque quartet pouvant prendre n'importe quelle valeur entre 00h et 0Eh, la valeur 0Fh étant réservée aux adresses de diffusion.

Les stations secondaires vérifient les trames adressées par la station primaire et la constatation d'une erreur sur le champ "longueur" ou sur le champ "données" entraîne une émission, par la station secondaire d'une trame d'acquittement négatif, qui est intégrée dans une procédure de reprise sur erreur par la station primaire.

Si une erreur est détectée, soit sur l'un des champs "compteur", "service" ou "adresse" grâce au code polynômial, soit sur le champ "contrôle", soit sur le champ "longueur", soit encore sur le code cyclique redondant protégeant le champ "données", une trame est considérée erronée. Une trame comportant une erreur sur "l'en-tête", c'est-à-dire sur l'un ou plusieurs des champs "compteur", "service" , "adresse" ou "contrôle" est ignorée.

La station primaire gère l'ensemble des communications. Ainsi, elle interroge successivement chaque station secondaire et détecte d'éventuels défauts en réalisant une supervision desdites stations secondaires, qui n'émettent que sur sollicitation de la station primaire, qui est seule à pouvoir prendre l'initiative d'un échange.

Le procédé conforme à l'invention permet deux types d'adressage, à savoir un adressage individuel, en vue de l'émission vers une seule station secondaire, et un adressage de diffusion émettant une même trame en direction d'un groupe de stations secondaires.

En service, la station primaire émet plusieurs types de messages, à savoir de demande d'information, de commande, d'interrogation ouverte, de diffusion et d'invitation à émettre.

Dans le premier cas, la station primaire émet une trame d'information et reçoit en retour, soit une trame d'information si la station secondaire a reçu correctement le message, soit une trame d'acquittement négatif ou aucune réponse si la station secondaire n'a pas reçu correctement le message, la station primaire réitérant alors des tentatives d'émission au prorata d'un nombre maximal de tentatives.

Le temps de réponse d'une trame est évalué à T0 millisecondes après émission du dernier caractère par la station primaire, suivant un paramètre T0 prédéterminé, représentant la durée maximale et, après dépassement de cette durée, on considère qu'aucune réponse n'est arrivée, de sorte que la station primaire réitère une tentative d'émission. Cette tentative peut être réitérée suivant un paramètre N0 représentant un maximum de réitérations.

Dans le cas d'une commande, la station primaire émet également une trame d'information et reçoit en retour, soit une trame d'acquittement si la station secondaire a reçu correctement la trame, soit une trame de non acquittement ou aucune réponse, si la station n'a pas reçu correctement la trame dans un délai de T1 millisecondes après émission du dernier caractère par la station primaire, une réitération de l'envoi de la trame de N1 tentatives au maximum étant réalisée en cas de réponse négative.

Pour opérer une interrogation ouverte, la station primaire émet une trame d'information vers un groupe de stations secondaires et reçoit en retour, soit une trame d'information si seule une station secondaire signale un évènement, soit des données incohérentes si plusieurs stations secondaires signalent chacune un évènement, la station primaire mettant alors en oeuvre une procédure de localisation des stations secondaires signalant un évènement, soit encore aucune réponse dans le cas où aucun évènement n'est signalé par aucune station après un délai de transmission prédéterminé de T2 millisecondes. On considère qu'aucune réponse n'est arrivée si aucune trame n'est reçue dans ledit délai de T2 millisecondes après émission du dernier caractère par la station primaire. T2 représente un paramètre fixe.

En cas de diffusion, la station primaire émet successivement N3 trames d'information identiques à intervalles de T3 millisecondes, ces trames ne devant donner lieu à aucune réponse de la part des stations secondaires.

Pour la procédure d'invitation à émettre la station primaire émet une trame correspondante à destination d'une station secondaire et attend en réponse, soit une trame d'acquittement si la station secondaire n'a pas de message en attente, soit une trame d'information si un tel message est disponible à la station secondaire, soit encore aucune réponse dans le cas où la trame n'a pas été reçue correctement par la station secondaire dans un délai de T6 millisecondes après émission du dernier caractère par la station primaire, T6 étant un paramètre prédéterminé, la station primaire effectuant alors un maximum de N6 tentatives de réitérations de l'émission, N6 étant également un paramètre prédéterminé.

Selon une autre caractéristique de l'invention, le champ "données" est avantageusement constitué par trois sous-champs, à savoir par un champ "type de message" obligatoire d'un octet, par un champ "objet" optionnel d'un octet et éventuellement par un champ "paramètres", si le champ "objet" est présent.

Le champ "type de message" définit des valeurs de demande d'information sans paramètre, de demande d'information avec paramètres, de commande sans acquittement, de commande avec acquittement, de réponse à une demande d'information, d'acquittement d'une commande, d'acquittement et d'exécution différée et d'interprétation ou d'exécution impossible.

Le champ "objets" est destiné à définir les valeurs suivantes : heure, diagnostic, requête, réponse requête, status, message, valeur, tout ou rien, rupture, reprise, résultat d'une commande différée et notification d'alarme.

La valeur -heure- est un message émis par la station primaire se traduisant dans le champ "paramètres" par 6 octets représentant respectivement la date, le mois, l'année, l'heure, les minutes et le jour.

La valeur -diagnostic- correspond, dans le champ "paramètres", à des informations sur l'évènement signalé, dans le cas d'une réponse envoyée par une station secondaire.

La valeur -requête- apparaît dans le champ "paramètres" pour décrire une commande à exécuter par la station primaire dans le cas d'une réponse envoyée par une station secondaire et la valeur -réponse requête-, qui est un message émis par la station primaire, décrit dans le champ "paramètres" la réponse fournie par une station secondaire à une requête soumise à la station primaire par une autre station secondaire.

Dans le cas d'une réponse envoyée par une station secondaire, le champ "paramètres" contient un octet permettant de signaler à la station primaire la présence d'une valeur -diagnostic- ou d'une valeur -requête- ou du -résultat d'une commande en attente-.

La valeur -message- est émise sous forme de demande d'information par la station primaire et permet de récupérer un message auprès d'une station secondaire. Cette valeur est émise sous forme de commande et permet à la station primaire d'émettre un message vers une ou plusieurs stations secondaires.

Le message -valeur-, défini dans le champ "paramètres", est émis par la station primaire, soit sous forme de demande d'information, soit sous forme de commande, et permet, respectivement, soit de récupérer un ensemble de valeurs numériques auprès d'une station secondaire, soit de modifier un ensemble de valeurs numériques auprès d'une station secondaire.

La valeur -tout ou rien- est émise par la station primaire, soit sous forme de demande d'information, afin de récupérer l'état d'une entrée tout ou rien auprès d'une station secondaire, soit sous forme de commande, en vue de modifier l'état d'un ensemble de sorties tout ou rien.

La valeur -rupture-, définie dans le champ "paramètres", est émise sous forme de commande par la station primaire et permet de signaler à une ou plusieurs stations secondaires la perte de la supervision d'une station secondaire, qui est identifiée par le champ "paramètres".

Ce champ "paramètres" identifie également la station secondaire, dont la reprise de supervision a été signalée à une ou plusieurs stations secondaires par l'émission, sous forme de commande, de la valeur -reprise-.

La valeur -résultat d'une commande différée- est émise sous forme de demande d'information par la station primaire et permet d'obtenir de la part d'une station secondaire le résultat d'une commande dont l'exécution avait été différée.

Enfin, la valeur -notification d'alarme- est émise sous forme d'une commande par la station primaire et permet de signaler à une ou plusieurs stations secondaires l'apparition d'une alarme ou d'un évènement sur une station secondaire.

Grâce à l'invention, il est possible de réaliser une communication interactive, notamment pour des applications en domotique par mise en oeuvre de systèmes de constitution simple et selon un procédé simple.

Bien entendu, l'invention n'est pas limitée au mode de réalisation décrit. Des modifications restent possibles, notamment du point de vue de la mise en oeuvre du procédé, sans sortir pour autant du domaine de protection de l'invention.

## Revendications

1. Procédé de communication interactif, notamment pour des applications en domotique, caractérisé en ce qu'il consiste à réaliser, sur un câble coaxial, un échange bi-directionnel de messages à partir d'une station primaire unique vers des stations secondaires, par un adressage individuel ou de diffusion générale ou restreinte, l'initiative de l'émission étant gérée par la station primaire.

2. Procédé, suivant la revendication 1, caractérisé en ce que les messages échangés entre la station primaire et la ou les stations secondaires sont structurés en trames de longueurs variables.

3. Procédé, suivant la revendication 2, caractérisé en ce que chaque trame est constituée par au moins une "en-tête" comportant un champ de "service" déterminant le type d'échange, un champ "compteur" pour l'identification des trames et un champ "adresse" désignant le destinataire ou l'émetteur.

4. Procédé, suivant la revendication 3, caractérisé en ce que l'envoi de la trame par la station primaire désigne le destinataire, alors que dans le cas où la trame est envoyée par une station secondaire, l'émetteur est désigné.

5. Procédé, suivant la revendication 3, caractérisé en ce que les champs "service" et "compteur" sont regroupés en un octet et le champ "adresse" comporte trois octets.

6. Procédé, suivant l'une quelconque des revendications 3 et 5, caractérisé en ce que les octets constituant les champs de' "l'en-tête", à savoir "service", "compteur" et "adresse" sont protégés par un code polynômial de 6 bits, dont le polynôme générateur présente la formule suivante :
$$x^6 + x^5 + x^4 + x^3 + 1$$
et par un champ "contrôle", dont la valeur est calculée par un OU exclusif entre l'octet regroupant les champs "service" et "compteur" et les trois octets du champ "adresse".

7. Procédé, suivant l'une quelconque des revendications 2 et 3, caractérisé en ce qu'une trame envoyée par la station primaire est suivie d'un champ "données" pour former une trame d'information.

8. Procédé, suivant la revendication 7, caractérisé en ce que la trame est complétée par un champ "longueur" d'un octet, protégé, d'une part, par un code polynômial de formule :
$$x^6 + x^5 + x^4 + x^3 + 1$$
et, d'autre part, par un champ "extension" de 2 bits.

9. Procédé, suivant la revendication 7, caractérisé en ce que le champ "données" comporte avantageusement entre 1 octet et 255 octets et est protégé par un code cyclique redondant de 16 bits, dont le polynôme générateur présente la formule suivante :
$$x^{16} + x^{12} + x^5 + 1.$$

10. Procédé, suivant l'une quelconque des revendications 1, 2 et 4, caractérisé en ce qu'une adresse de station secondaire est constituée de 3 octets décomposés en 6 quartets de 4 bits, chaque quartet pouvant prendre n'importe quelle valeur entre 00h et 0Eh, la valeur 0Fh étant réservée aux adresses de diffusion.

11. Procédé, suivant l'une quelconque des revendications 1, 2, 4 et 7, caractérisé en ce que les stations secondaires vérifient les trames adressées par la station primaire et la constatation d'une erreur sur le champ "longueur" ou sur le champ "données" entraîne une émission, par la station secondaire d'une trame d'acquittement négatif, qui est intégrée dans une procédure de reprise sur erreur par la station primaire.

12. Procédé, suivant l'une quelconque des revendications 1, 2, 4 et 7, caractérisé en ce que, en service, la station primaire émet plusieurs types de messages, à savoir de demande d'information, de commande, d'interrogation ouverte, de diffusion et d'invitation à émettre.

13. Procédé, suivant la revendication 12, caractérisé en ce que, dans le cas d'un message de demande d'information, la station primaire émet une trame d'information et reçoit en retour, soit une trame d'information si la station secondaire a reçu correctement le message, soit une trame d'acquittement négatif ou aucune réponse si la station secondaire n'a pas reçu correctement le message, la station primaire réitérant alors des tentatives d'émission au prorata d'un nombre maximal de tentatives, le temps de réponse d'une trame étant évalué à T0 millisecondes après émission du dernier caractère par la station primaire, suivant un paramètre T0 prédéterminé, représentant la durée maximale et, après dépassement de cette durée, on considère qu'aucune réponse n'est arrivée, la station primaire réitèrant une tentative d'émission suivant un paramètre N0 représentant un maximum de réitérations.

14. Procédé, suivant la revendication 12, caractérisé en ce que, dans le cas d'un message de commande, la station primaire émet une trame d'information et reçoit en retour, soit une trame d'acquittement si la station secondaire a reçu correctement la trame, soit une trame de non acquittement ou aucune réponse, si la station n'a pas reçu correctement la trame dans un délai de T1 millisecondes après émission du dernier caractère par la station primaire, une réitération de l'envoi de la trame de N1 tentatives au maximum étant réalisée en cas de réponse négative.

15. Procédé, suivant la revendication 12, caractérisé en ce que, pour opérer une interrogation ouverte, la station primaire émet une trame d'information vers un groupe de stations secondaires et reçoit en retour, soit une trame d'information si seule une station secondaire signale un évènement, soit des données incohérentes si plusieurs stations secondaires signalent chacune un évènement, la station primaire mettant alors en oeuvre une procédure de localisation des stations secondaires signalant un évènement, soit encore aucune réponse dans le cas où aucun évènement n'est signalé par aucune station après un délai de transmission prédéterminé de T2 millisecondes.

16. Procédé, suivant la revendication 12, caractérisé en ce que, dans le cas d'un message de diffusion, la station primaire émet successivement N3 trames d'information identiques à intervalles de T3 millisecondes, ces trames ne devant donner lieu à aucune réponse de la part des stations secondaires.

17. Procédé, suivant la revendication 12, caractérisé en ce que pour le message de procédure d'invitation à émettre la station primaire émet une trame correspondante à destination d'une station secondaire et attend en réponse, soit une trame d'acquittement si la station secondaire n'a pas de message en attente, soit une trame d'information si un tel message est disponible à la station secondaire, soit encore aucune réponse dans le cas où la trame n'a pas été reçue correctement par la station secondaire dans un délai de T6 millisecondes après émission du dernier caractère par la station primaire, T6 étant un paramètre prédéterminé, la station primaire effectuant alors un maximum de N6 tentatives de réitérations de l'émission, N6 étant également un paramètre prédéterminé.

18. Procédé, suivant l'une quelconque des revendications 7, 9 et 11, caractérisé en ce que le champ "données" est avantageusement constitué par trois sous-champs, à savoir par un champ "type de message" obligatoire d'un octet, par un champ "objet" optionnel d'un octet et éventuellement par un champ "paramètres", si le champ "objet" est présent.

19. Procédé, suivant la revendication 18, caractérisé en ce que le champ "type de message" définit des valeurs de demande d'information sans paramètre, de demande d'information avec paramètres, de commande sans acquittement, de commande avec acquittement, de réponse à une demande d'information, d'acquittement d'une commande, d'acquittement et d'exécution différée et d'interprétation ou d'exécution impossible.

20. Procédé, suivant la revendication 18, caractérisé en ce que le champ "objets" est destiné à définir les valeurs suivantes : heure, diagnostic, requête, réponse requête, status, message, valeur, tout ou rien, rupture, reprise, résultat d'une commande différée et notification d'alarme.